# EUROPÄISCHE PATENTANMELDUNG

(11) **EP 3 477 158 A1**
(43) Veröffentlichungstag der Anmeldung: **01.05.2019**
(21) Anmeldenummer: 17450012.4
(22) Anmeldetag: 30.10.2017
(51) Int. Cl.: F16H 57/04, F16H 55/17

(54) **ZAHNRAD**

(71) Anmelder: REINTRIEB GmbH, 1070 Wien (AT)
(72) Erfinder: SIGFRIED, Lais, 56322 Spay (DE); DOMINIK, Cofalka, 1060 Wien (AT)
(74) Vertreter: Keschmann, Marc

(57) **Zusammenfassung**

Bei einem Zahnrad mit einem Zahnradkörper und gleichmäßig verteilten, eine Außen- oder Innenverzahnung ausbildenden Zähnen, die jeweils einen Zahngrund, Zahnflanken und einen Zahnkopf aufweisen, weist der Zahnradkörper und/oder die Zahne Hohlräume auf, die an der Oberflache des Zahnkopfes, des Zahngrunds und/oder der Zahnflanken münden und mit einer im Zahnradkörper ausgebildeten Schmier- und/oder Kühlmittelzuführung in Fluidverbindung stehen.

## Beschreibung

Die Erfindung betrifft ein Zahnrad mit einem Zahnradkörper und gleichmäßig verteilten, eine Außen- oder Innenverzahnung ausbildenden Zähnen, die jeweils einen Zahngrund, Zahnflanken und einen Zahnkopf aufweisen.

Die Erfindung betrifft weiters ein Zahnradgetriebe umfassend wenigstens ein Zahnrad der eingangs genannten Art.

Zahnradgetriebe werden üblicher Weise geschmiert, indem die Zahnräder in das Schmieröl eintauchen oder indem eine Pumpe für einen Ölumlauf und eine Versorgung der Schmierstellen sorgt. Dass ein Getriebe auch ohne mineralisches Schmieröl oder synthetische Bioschmierstoffe geschmiert werden kann, ist für Hochleistungsgetriebe bisher noch nicht befriedigend bekannt.

Bei Zahnrädern, die in schwieriger Umgebung arbeiten müssen besteht die Gefahr von Mangelschmierung und Überhitzung. Mangelschmierung entsteht unter anderem, wenn nicht genügend Schmier- oder Kühlmittel an die Kontaktflächen der Zahnflanken gebracht werden kann. Je geringer die Schmier- oder Kühlfähigkeit des Schmier- oder Kühlmittels ist, umso üppiger muss es dort angeboten werden, wo die Zahnflanken aufeinander gleiten. Auch andere Faktoren spielen eine Rolle, wie die Haftung des Schmiermittels an der benetzten Fläche, die Verteilung und die Fähigkeit, den sogenannten elastohydrodynamischen(EHD)-Effekt aufzubauen. Auch die Betriebstemperatur und Viskosität spielen eine wichtige Rolle und damit auch die Kühlung, die durch das Schmier- oder Kühlmittel erreicht werden soll. Es gibt auch Getriebe mit Zahnrädern, die aus gut gleitfähigen Materialien hergestellt werden oder bei denen die Zahnflanken mit einer Gleitschicht versehen sind. Diese Zahnräder laufen ohne flüssiges Schmiermittel, müssen aber mit Luft oder Gas oder mit Kühlmitteln, die vor allem an den Zahnflanken verdampfen sollen, gekühlt werden.

Unter dem Begriff Mangelschmierung ist nicht nur der Mangel an Getriebeschmieröl zu verstehen, sondern auch der Betrieb mit ungewöhnlichen Schmiermitteln oder Kühlmitteln, wie z.B. Wasser, wässerigen Lösungen, Trinkwasser, Seewasser, Wasserlösungen mit Frostschutzmitteln, chemische Lösungen, Kältemitteln, Kältemischungen, Luft oder Gas.

Die vorliegende Erfindung zielt daher darauf ab, ein Zahnrad derart weiterzubilden, dass es an den Kontaktstellen auch unter schwierigen Bedingungen zufriedenstellend geschmiert und/oder gekühlt werden kann.

Zur Lösung dieser Aufgabe sieht die Erfindung bei einem Zahnrad der eingangs genannten Art vor, dass der Zahnradkörper und/oder die Zähne Hohlräume aufweisen, die an der Oberfläche des Zahnkopfes, des Zahngrunds und/oder der Zahnflanken münden und mit einer im Zahnrad ausgebildeten Schmier- und/oder Kühlmittelzuführung in Fluidverbindung stehen. Erfindungsgemäß wird das Schmier- und/oder Kühlmittel somit aus dem inneren Zahnrad heraus durch eine Anordnung von Hohlräumen direkt in die Verzahnung eingebracht bzw. in den Zahneingriffsbereich gefördert. Dies bewirkt, dass genügend Schmier- und/oder Kühlmittel im Zahneingriffsbereich angeboten wird und gleichzeitig mit dem Schmiermittel bzw. dem Kühlmittel dort gekühlt wird, wo die Erwärmung entsteht.

Um eine gleichmäßige Schmier- oder Kühlmittelzuführung im Eingriffsbereich zu gewährleisten, sind die Hohlräume, über welche das Schmier- oder Kühlmittel an die Oberfläche des Zahnrads geführt wird, in Umfangsrichtung gleichmäßig über die Verzahnung verteilt, wobei insbesondere vorgesehen ist, dass an jedem Zahn der Verzahnung wenigstens eine Mündung angeordnet ist. Bevorzugt ist an jedem Zahn eine Vielzahl von Mündungen vorgesehen.

Die Hohlräume können beispielsweise am Zahnkopf eines jeden Zahns wenigstens eine Mündung, bevorzugt eine Vielzahl von Mündungen, aufweisen. Die Hohlräume können alternativ am Zahngrund eines jeden Zahns wenigstens eine Mündung, bevorzugt eine Vielzahl von Mündungen, aufweisen. Alternativ können Hohlräume an wenigstens einer Zahnflanke, insbesondere an beiden Zahnflanken, eines jeden Zahns wenigstens eine Mündung, bevorzugt eine Vielzahl von Mündungen, aufweisen.

Weiters sind Kombinationen dieser Ausführungsformen möglich, sodass beispielsweise am Zahnkopf und am Zahngrund eines jeden Zahns wenigstens eine Mündung, bevorzugt eine Vielzahl von Mündungen, angeordnet ist. Alternativ kann am Zahnkopf und an den Zahnflanken eines jeden Zahns wenigstens eine Mündung, bevorzugt eine Vielzahl von Mündungen, angeordnet sein. Alternativ kann am Zahngrund und an den Zahnflanken eines jeden Zahns wenigstens eine Mündung, bevorzugt eine Vielzahl von Mündungen, angeordnet sein. Schließlich ist es auch möglich am Zahnkopf, am Zahngrund und an den Zahnflanken eines jeden Zahns wenigstens eine Mündung, bevorzugt eine Vielzahl von Mündungen, vorzusehen.

Besonders vorteilhaft ist die Zuführung des Schmier- oder Kühlmittels an den Zahnflanken, wenn dies an oder im Bereich der Wälzlinie erfolgt, weil dort ein Wechsel der Gleitrichtung zwischen den Zahnflanken stattfindet und sich ein neuer, hydrodynamischer Schmierspalt aufbauen muss.

Was die Ausbildung der Hohlräume betrifft, ist eine Vielzahl von Varianten denkbar, wobei die Hohlräume die Funktion haben, das Schmier- oder Kühlmittel im Inneren des Zahnradkörpers und/oder im Inneren der Zähne von der Schmier- oder Kühlmittelzuführung an die Zahnradoberfläche zu transportieren. Gemäß einer bevorzugten Ausbildung sind die Hohlräume von Kanälen gebildet, die sich zumindest abschnittsweise in radialer Richtung erstrecken. Der Durchmesser der Kanäle ist hierbei so bemessen, dass einerseits ein Kanalquerschnitt zur Verfügung steht, der einen ausreichenden Schmier- oder Kühlmittelstrom erlaubt, und dass der Zahnradkörper bzw. die Zähne andererseits nicht übermäßig geschwächt werden. Bevorzugt ist hierbei vorgesehen, dass das von den Kanälen eingenommene Zahnvolumen einen Anteil von 20%, vorzugsweise einen Anteil von 10% des Zahngesamtvolumens nicht überschreitet.

Eine weitere bevorzugte Ausbildung sieht vor, dass die Kanäle einen Querschnitt mit einer Querschnittsfläche von < 7 mm², bevorzugt < 5 mm², insbesondre mit einer maximalen Breite von 2 mm und einer maximalen Länge von 3 mm aufweisen.

Eine strömungstechnisch vorteilhafte Ausführung sieht weiters vor, dass die Kanäle einen sich in Richtung der Austrittsöffnung verjüngenden Querschnitt aufweisen. Dadurch wird die Austrittsgeschwindigkeit des Schmier- oder Kühlmittels an den einzelnen Kanalmündungen erhöht und beispielsweise ein Verspritzen oder Zerstäuben des Schmier- oder Kühlmittels erreicht.

Eine möglichst gleichmäßige Verteilung des Schmier- oder Kühlmittels über die in Richtung der Rotationsachse gemessene Dicke der einzelnen Zähne wird in bevorzugter Weise dadurch erreicht, dass an der Oberfläche eines jeden Zahnkopfes bzw. Zahngrunds bzw. einer jeden Zahnflanke eine Mehrzahl von Kanälen mündet, wobei vorzugsweise die Mündungen der Mehrzahl der Kanäle in wenigstens einer in Richtung der Rotationsachse des Zahnrades verlaufenden Reihe angeordnet sind.

Bei Schrägverzahnungen, Bogenverzahnungen und bei Kegelrädern mit z.B. Zyklo-Palloid-Verzahnung sowie bei Schnecken und Schneckenrädern folgt die Anordnung der Zuführkanäle bzw. der Mündungen bevorzugt der Zahn- und/oder der Zahnlückenform, d.h. die oben erwähnte Reihe der Mündungen hat einen der Zahnrichtung bzw. Zahnkrümmung entsprechenden Verlauf.

Bei den Zuführkanälen im Zahngrund kann es vorteilhaft sein, die Mündungen der Kanäle mit einer Verstärkung zu versehen, um die Zahnfußspannungen an dieser Stelle niedriger zu halten. Diese Verstärkung kann ungefähr halb so hoch sein wie das übliche Kopfspiel des Gegenrades.

Die Hohlräume können auch als Poren eines offenporigen Materials ausgebildet sein, aus dem der Zahnradkörper und/oder die Zähne zumindest bereichsweise bestehen. Es kann auch eine Kombination von Kanälen und wenigstens einem offenporigen Bereich vorgesehen sein. Der offenporige Bereich kann hierbei insbesondere eine oberflächennahe bzw. eine an die Oberfläche grenzende Schicht der Zähne ausbilden.

Wie bereits erwähnt, stehen die Hohlräume mit einer im Zahnradkörper ausgebildeten Schmier- oder Kühlmittelzuführung in Fluidverbindung. Die Schmier- oder Kühlmittelzuführung kann hierbei eine im Zahnradkörper ausgebildete Kammer umfassen, in welche das Schmier- oder Kühlmittel von außen eingebracht wird bzw. in welcher das Schmier- oder Kühlmittel gesammelt wird. Die Förderung des Schmier- oder Kühlmittels von der Schmier- oder Kühlmittelzuführung durch die Hohlräume an die Oberfläche des Zahnrads kann bei der Rotation des Zahnrades insbesondere durch die Zentrifugalkraft bewirkt werden. Dies hat den Vorteil, dass die Förderleistung mit steigender Drehzahl des Zahnrads zunimmt, sodass hierdurch eine automatische Anpassung der Förderleistung an den Schmier- oder Kühlmittelbedarf gelingt.

Bevorzugt kann vorgesehen sein, dass die Schmier- oder Kühlmittelzuführung eine Fördereinrichtung für das Schmier- oder Kühlmittel aufweist. Die Fördereinrichtung dient hierbei dazu, das Schmier- oder Kühlmittel dem Zahnrad, insbesondere dem Zahnradkörper oder den Zähnen, von außen zuzuführen. Eine besonders vorteilhafte Ausbildung sieht hierbei vor, dass die Fördereinrichtung Förderelemente aufweist, welche mit dem Zahnrad mitrotieren. Insbesondere kann die Fördereinrichtung nach Art einer Zentrifugalpumpe ausgebildet sein und eine Vielzahl von am oder im Zahnradkörper ausgebildeten Schaufeln oder Speichen aufweisen. Die Schaufeln oder Speichen können hierbei seitlich am Zahnradkörper angebracht sein und fördern das Schmier- oder Kühlmittel durch Zentrifugalwirkung in eine Kanalanordnung in den Zahnfuß- und Zahnkopfbereich der Zähne.

Alternativ oder zusätzlich kann die Schmier- oder Kühlmittelzuführung eine im Zahnradkörper ausgebildete Ringkammer aufweisen, an welche eine externe Schmier- oder Kühlmittelleitung über eine Drehdurchführung anschließbar ist. Die Zuführung des Schmier- oder Kühlmittels erfolgt hier somit über einen feststehenden Teil, wobei die Drehdurchführung einen abgedichteten Übergang des Schmier- oder Kühlmittels von einem Kanal des feststehenden Teils auf den drehbaren Zahnradkörper zur Verfügung stellt.

Die Zufuhr von Schmier- oder Kühlmittel über eine externe Schmier- oder Kühlmittelleitung kann insbesondere dann vorgesehen sein, wenn die allein durch die Zentrifugalkraft erreichte Förderleistung nicht ausreichend ist. Der erforderliche Druck in der externen Schmier- oder Kühlmittelleitung kann durch eine angeschlossene Schmierpumpe hergestellt werden. Die Drehdurchführung kann bevorzugt seitlich am Zahnrad (an einer oder an beiden Seiten des Zahnrads) oder durch die Welle erfolgen. Mit einem entsprechenden Druck der Pumpe kann auch ein hydrostatisches Abheben der Zahnflanken zumindest teilweise erreicht werden, besonders wenn statt einer Evolventenverzahnung ein anderes Verzahnungsprofil mit hoher Flankenüberdeckung, z.B. eine Zykloidenverzahnung benutzt wird.

Die Zuführung des Schmier- oder Kühlmittels über einen feststehenden Teil erlaubt weiters ein sektorales Zuführen des Schmier- oder Kühlmittels in lediglich demjenigen Winkelbereich des Zahnrads, in dem der Zahneingriff mit einem anderen Zahnrad stattfinden soll. Es wird hierbei nur die Oberfläche derjenigen Zähne mit Schmierstoff versorgt, die sich gerade im gewünschten Winkelbereich befinden. Gemäß einer bevorzugten Weiterbildung weist ein einen Anschluss für die externe Schmier- oder Kühlmittelleitung aufweisender feststehender Teil der Drehdurchführung einen vorzugsweise kreisbogenförmigen Kanal auf, der über eine sich lediglich über einen Umfangsteilabschnitt, insbesondere über einen Zentriwinkel von < 180°, vorzugsweise < 60°, erstreckende Öffnung mit der Ringkammer des Zahnradkörpers in Fluidverbindung steht.

Die Herstellung des erfindungsgemäßen Zahnrads erfolgt in bevorzugter Weise mittels eines generativen Fertigungsverfahrens, wie z.B. selektives Laserschmelzen (SLM) oder selektives Lasersintern (SLS). Derartige Verfahren erlauben die Realisierung von komplexen Strukturen und insbesondere die Ausbildung der erwähnten Hohlräume im Inneren des Zahnradkörpers und/oder der Zähne sowie der Schmier- oder Kühlmittelzuführung, wobei das Zahnrad in einem Stück hergestellt werden kann. Mit Vorteil wird ein generatives Fertigungsverfahren eingesetzt, das einen schichtweisen Aufbau des Zahnrades erlaubt, wie z.B. selektives Laserschmelzen (SLM) oder selektives Lasersintern (SLS). Das Zahnrad kann dabei aus verschiedenen Materialien, wie z.B. aus einem Kunststoff, aus einem Metall oder einer Metalllegierung oder aus einem Keramikwerkstoff hergestellt sein.

Gemäß einem weiteren Aspekt betrifft die Erfindung ein Zahnradgetriebe, welches wenigstens ein erstes erfindungsgemäßes Zahnrad und ein zweites erfindungsgemäßes Zahnrad umfasst, deren Zähne miteinander in Eingriff stehen. Die beiden in Eingriff miteinander stehenden Zähne sind hierbei zur Kraftübertragung von einer Antriebsseite zu einer Abtriebsseite des Zahnradgetriebes vorgesehen.

Gemäß einem weiteren Aspekt betrifft die Erfindung ein Zahnradgetriebe, welches wenigstens ein erstes erfindungsgemäßes Zahnrad und wenigstens ein zweites Zahnrad umfasst, deren Zähne miteinander in Eingriff stehen. Die beiden in Eingriff miteinander stehenden Zähne sind hierbei zur Kraftübertragung von einer Antriebsseite zu einer Abtriebsseite des Zahnradgetriebes vorgesehen.

Es kann vorteilhaft sein, wenn die Anordnung der Mündungen an der Zahnoberfläche derart getroffen ist, dass im Eingriffsbereich von zwei Zahnrädern abwechselnd eine mit Mündungen versehene Fläche der Zähne des einen Rades mit einer ohne Mündungen versehenen Fläche der Zähne des anderen Rades und eine ohne Mündungen versehene Fläche der Zähne des einen Rades mit einer mit Mündungen versehenen Fläche der Zähne des anderen Rades in Berührung kommt. Insbesondere kann vorgesehen sein, dass im Eingriffsbereich von zwei Zahnrädern abwechselnd eine mit Mündungen versehene Zahnflanke des einen Rades mit einer ohne Mündungen versehenen Zahnflanke des anderen Rades und eine ohne Mündungen versehene Zahnflanke des einen Rades mit einer mit Mündungen versehenen Zahnflanke des anderen Rades in Berührung kommt.

Gemäß einer bevorzugten Ausbildung ist das Zahnradgetriebe als Stirnradgetriebe ausgebildet. Alternativ kann das Zahnradgetriebe auch als Kegelrad-, als Planeten- und/oder als Schneckengetriebe ausgebildet sein.

Als Schmier- oder Kühlmittel können verschiedene Stoffe zum Einsatz kommen, wobei bevorzugt mineralische oder synthetische Schmieröle, Wasser, wässerige Lösungen, Trinkwasser, Seewasser, Wasserlösungen mit Frostschutzmitteln oder chemische Lösungen, Kältemittel, Kältemischungen, Luft oder Gas verwendet werden können. Die Erfindung betriff daher auch die Verwendung eines erfindungsgemäßen Zahnrads in einem mit einem Schmier- oder Kühlmittel, insbesondere mit mineralischem oder synthetischem Schmieröl, Wasser, wässerigen Lösungen, Trinkwasser, Seewasser, Wasserlösungen mit Frostschutzmitteln oder chemischen Lösungen, Kältemitteln, Kältemischungen, Luft oder Gas geschmierten Zahnradgetriebes, wobei das Schmier- oder Kühlmittel der Zahnradkörper und/oder die Zähne Hohlräume aufweisen, die an der Oberfläche des Zahnkopfes, des Zahngrunds und/oder der Zahnflanken münden und mit einer im Zahnrad ausgebildeten Schmier- oder Kühlmittelzuführung in Fluidverbindung stehen.

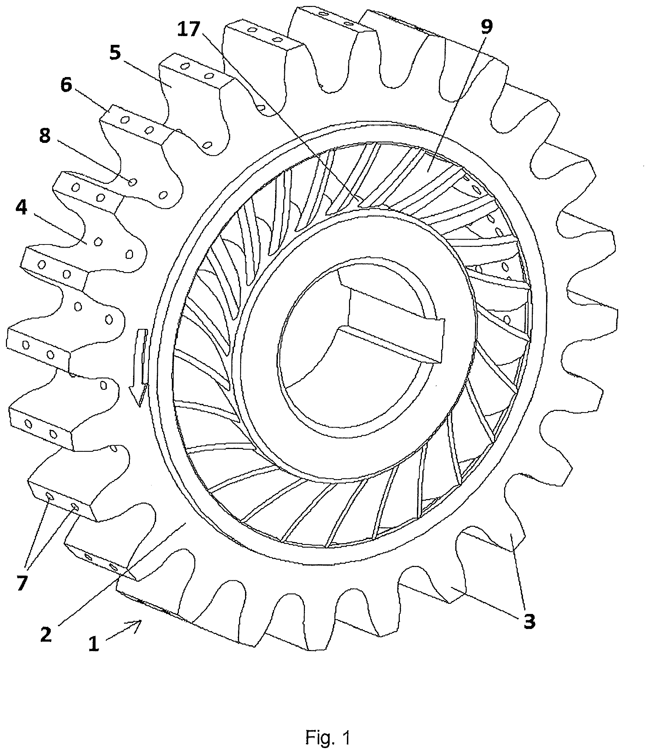

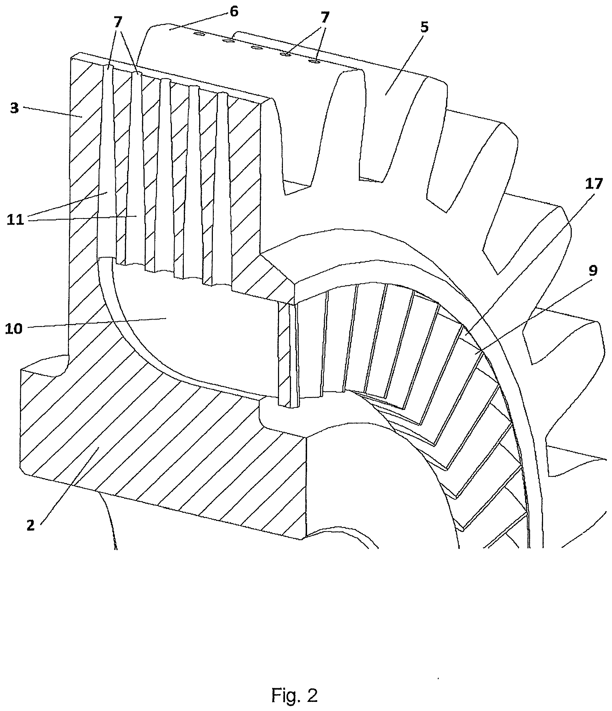

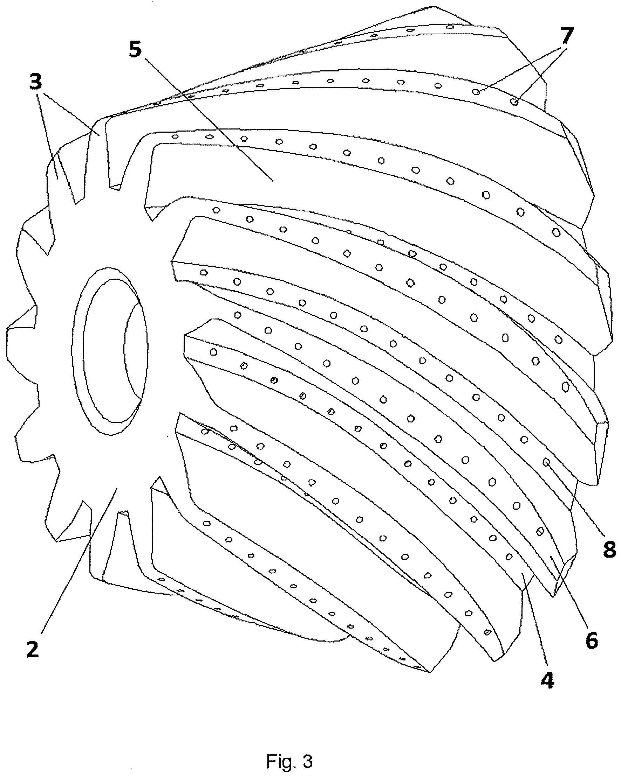

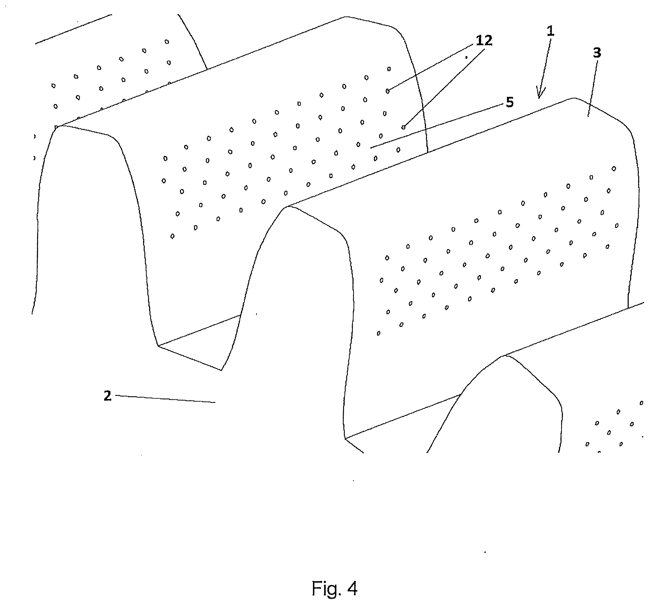

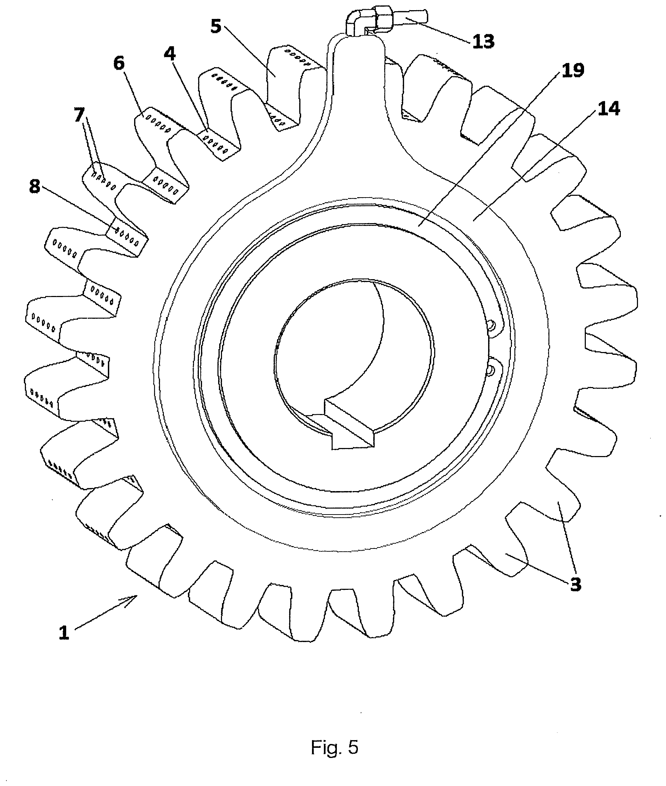

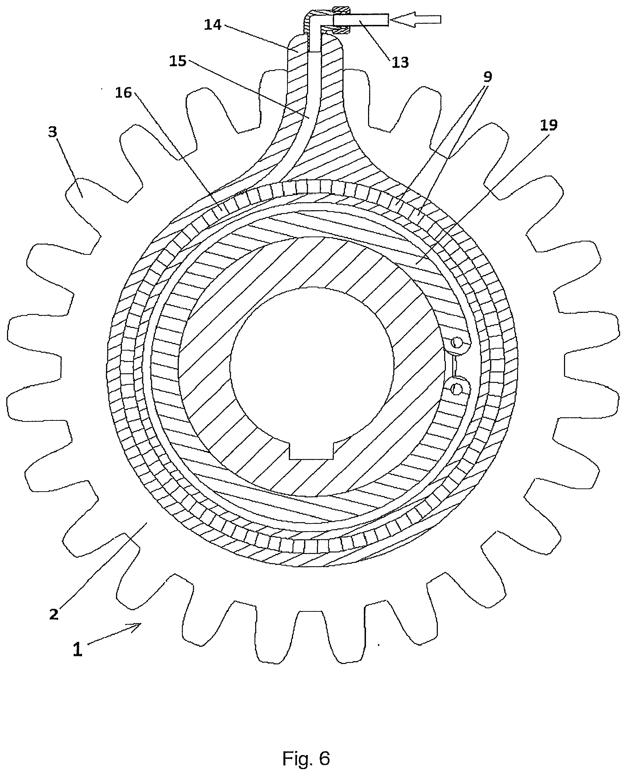

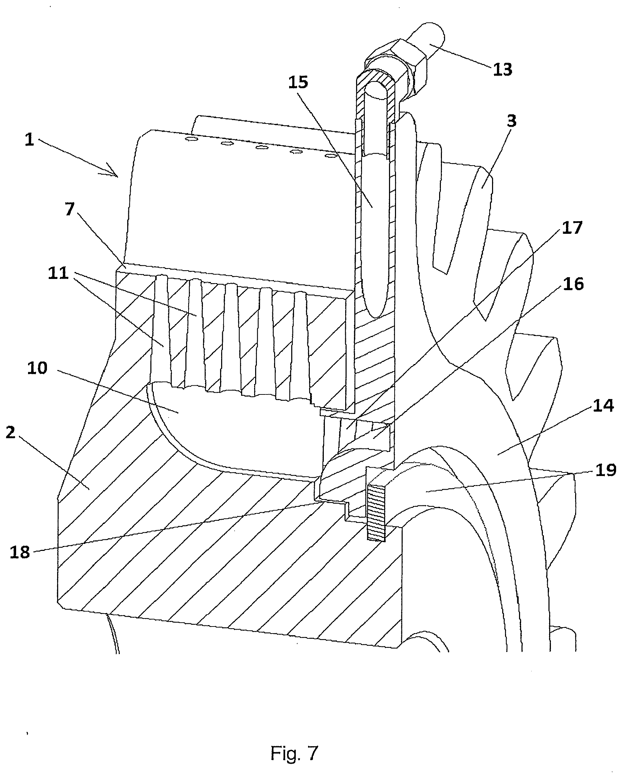

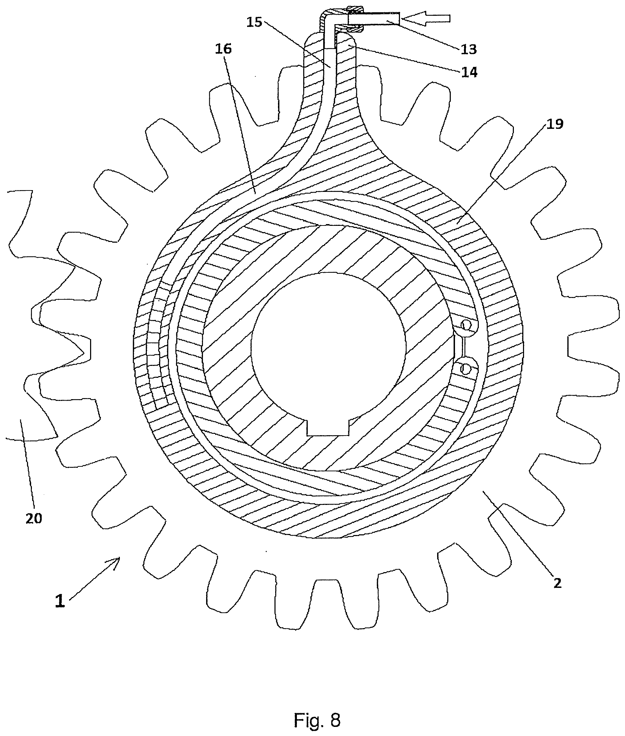

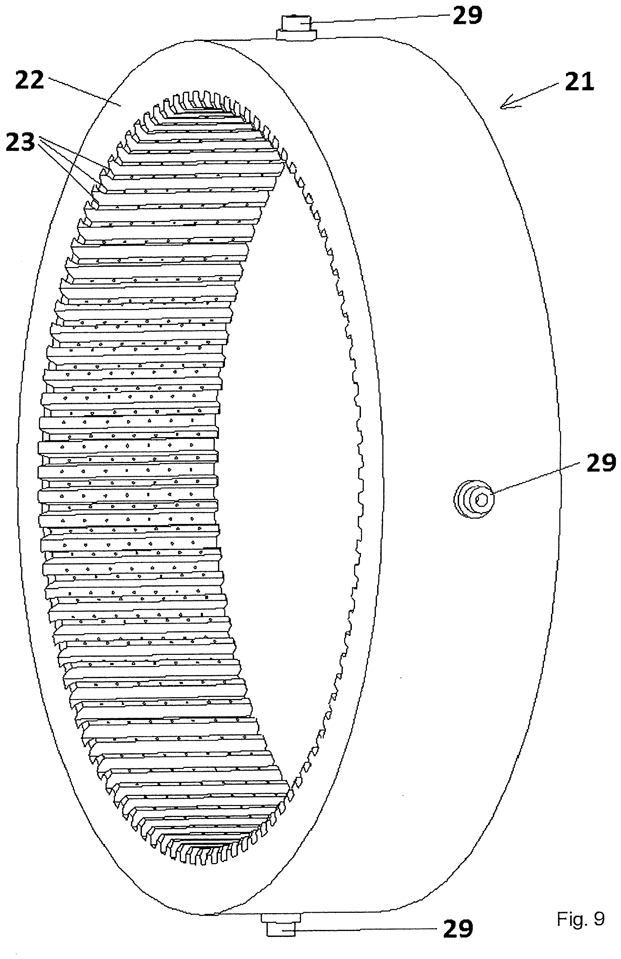

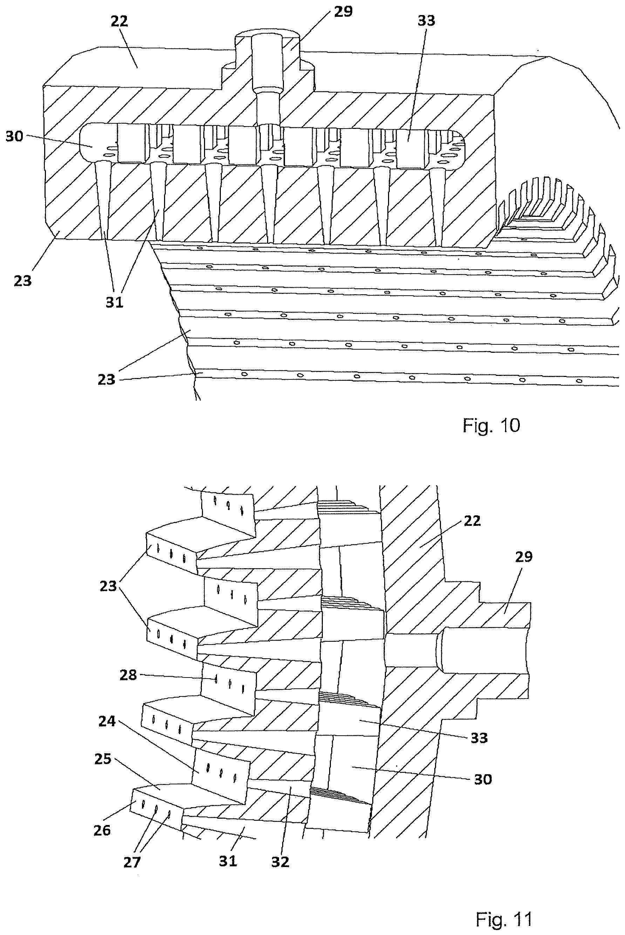

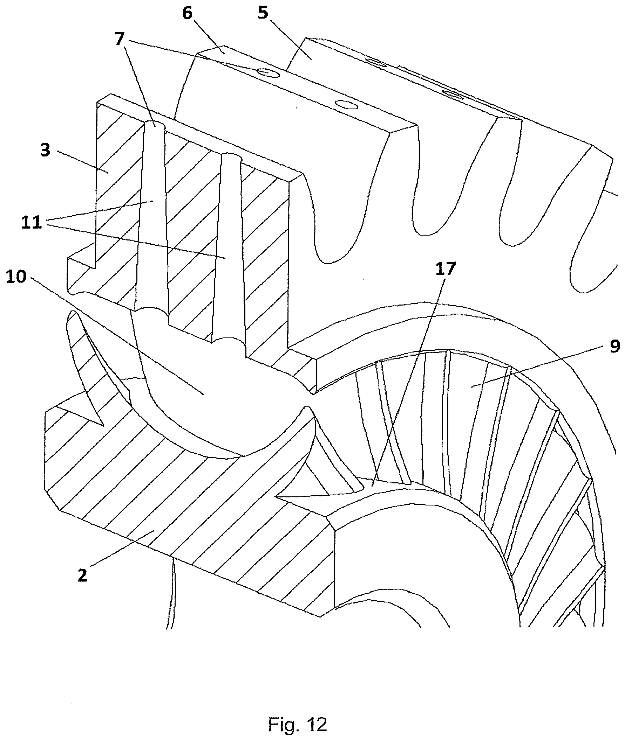

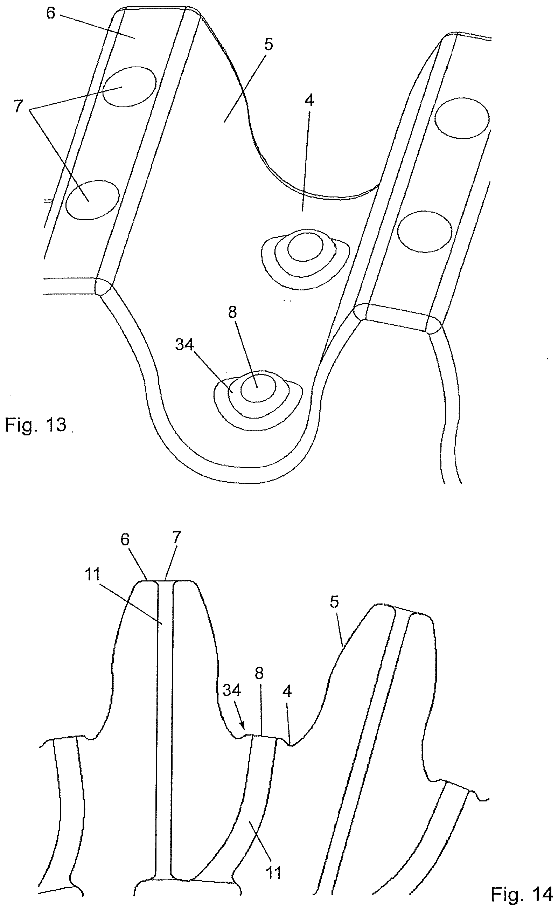

Die Erfindung wird nachfolgend anhand von in der Zeichnung schematisch dargestellten Ausführungsbeispielen näher erläutert. In diesen zeigen Fig. 1 eine perspektivische Ansicht eines erfindungsgemäßen Zahnrades, Fig. 2 eine Detailansicht des Zahnrads gemäß Fig. 1 in einem Längsschnitt mit einer größeren Anzahl von Kanälen als in Fig. 1, Fig. 3 eine abgewandelte Ausbildung eines Zahnrads in einer perspektivischen Ansicht, Fig. 4 eine weitere abgewandelte Ausbildung eines Zahnrads in einer perspektivischen Ansicht, Fig. 5 eine abgewandelte Ausbildung eines Zahnrads in einer perspektivischen Ansicht mit einer externen Schmier- oder Kühlmittelzuführung über eine Drehdurchführung, Fig. 6 einen Querschnitt der Ausbildung gemäß Fig. 5, Fig. 7 eine Detailansicht des Zahnrads gemäß Fig. 5 in einem Längsschnitt, Fig. 8 einen Querschnitt wie in Fig. 6, jedoch in einer abgewandelten Ausbildung, Fig. 9 eine perspektivische Ansicht eines erfindungsgemäßen Zahnrades mit Innenverzahnung, Fig. 10 eine Detailansicht des Zahnrads gemäß Fig. 9 in einem Längsschnitt, Fig. 11 eine Detailansicht des Zahnrads gemäß Fig. 9 im Querschnitt, Fig.12 eine abgewandelte Ausführung des Zahnrades mit zentrifugalpumpenähnlichen Schaufeln, die Schmier- oder Kühlmittel von beiden Seiten des Zahnrades aus ansaugen können, und Fig. 13 und 14 Mündungsverstärkungen der Zuführkanäle im Zahngrund.

In Fig. 1 ist ein als Stirnrad ausgebildetes Zahnrad mit 1 bezeichnet und umfasst einen Zahnradkörper 2 und gleichmäßig verteilte, eine Außenverzahnung ausbildende Zähne 3, die jeweils einen Zahngrund 4, Zahnflanken 5 und einen Zahnkopf 6 aufweisen. Am Zahngrund 4 und am Zahnkopf 6 sind Öffnungen bzw. Mündungen 7 bzw. 8 vorgesehen, über welche Schmier- oder Kühlmittel vom Inneren des Zahnrads 1 an die Zahnoberfläche gebracht werden kann. Auf jedem Zahngrund 4 und auf jedem Zahnkopf 6 ist eine Mehrzahl von Mündungen 7 bzw. 8 in einer Reihe angeordnet, die sich parallel zur Rotationsachse des Zahnrads 1 erstreckt. Seitlich am Zahnradkörper 2 ist in einem ringförmigen Bereich bzw. in einer ringförmigen Kammer 17 eine Vielzahl von Schaufeln 9 angeordnet, welche die ringförmige Kammer 17 in eine Vielzahl von Segmenten unterteilt. Die Schaufeln 9 bilden gemeinsam eine Zentrifugalpumpe aus, die im Betrieb, d.h. bei rotierendem Zahnrad 1, Schmier- oder Kühlmittel aus der Umgebung ansaugt und in die im Inneren des Zahnrads 1 angeordnete Schmier- oder Kühlmittelzuführung fördert, von wo das Schmier- oder Kühlmittel in Hohlräume gedrückt und über die Mündungen 8 bzw. 9 der Hohlräume auf die Oberfläche der Zähne 3 gebracht wird.

In der Schnittdarstellung gemäß Fig. 2 ist ersichtlich, dass die Schmier- oder Kühlmittelzuführung im Zahngrundkörper 2 Kammern 10 aufweist, in denen das von den Schaufeln 9 im Wesentlichen axial eintretende Schmier- oder Kühlmittel in die radiale Richtung umgeleitet wird. Die Weiterförderung des Schmier- oder Kühlmittels erfolgt über eine Mehrzahl von sich in radialer Richtung erstreckenden Kanälen 11, welche an der Oberfläche der Zähne 3 münden und dort Mündungen 7 ausbilden. Die Kanäle 11 verjüngen sich stetig in Richtung der Mündungen 7.

Um Schmier- oder Kühlmittel den Mündungen 8 am Zahngrund 4 zuzuführen ist im entsprechenden Querschnitt jeweils eine analoge Anordnung eines Hohlraums in Kombination mit radialen Kanälen vorgesehen, die sich zum Zahngrund 4 erstrecken.

Bei der abgewandelten Ausbildung gemäß Fig. 3 ist das Zahnrad 1 als Kegelrad mit Zyklo-Palloid-Verzahnung ausgebildet. Die Mündungen 7 bzw. 8 sind am Zahnkopf 6 bzw. am Zahngrund 4 daher in einer Reihe angeordnet, die dem gekrümmten Verlauf der Zyklo-Palloid-Verzahnung folgt.

Bei der Ausbildung gemäß Fig. 4 ist wieder ein Stirnrad 1 vorgesehen, wobei im Unterschied zur Ausbildung gemäß Fig. 1 die Mündungen 12 der Kanäle 9 lediglich an den Flanken 5 der Zähne 3 vorgesehen sind.

Die Ausbildung gemäß Fig. 5-7 entspricht im Wesentlichen der Ausbildung gemäß Fig. 1, wobei jedoch zusätzlich eine externe Schmier- oder Kühlmittelleitung vorgesehen ist, die an einen Anschluss 13 eines feststehenden Elements 14 angeschlossen wird. Das feststehende Element 14 umfasst einen ersten Kanal 15 (Fig. 6), über welchen das über den Anschluss 13 zugeführte Schmier- oder Kühlmittel zu einem zweiten ringförmigen Kanal 16 (Fig. 7), geleitet wird. Der feststehende ringförmige Kanal 16 und die ringförmige Kammer 17 bilden eine Drehdurchführung (Fig. 7), über welche das Schmier- oder Kühlmittel vom feststehenden Element 14 in das Zahnrad 1 fließen kann. Im Zahnrad 1 wird das Schmier- oder Kühlmittel wie bei der Ausbildung gemäß den Fig. 1 und 2 über die mit der ringförmigen Kammer 17 in Verbindung stehenden Kammern 10 und die Kanäle 11 an die Oberfläche der Zähne 3 geleitet.

Die Drehlagerung des feststehenden Elements 14 am Zahnrad 1 erfolgt über miteinander zusammenwirkende gestufte Lagerflächen 18. Ein Sicherungsring 19 dient der axialen Fixierung des feststehenden Elements 14 am Zahnrad 1.

Die Ausbildung gemäß Fig. 8 unterscheidet sich von der Ausbildung gemäß den Fig. 5-7 dadurch, dass der Kanal 16 nicht ringförmig ist, sondern sich lediglich über einen Kreisbogen erstreckt, sodass das von extern zugführte Schmier- oder Kühlmittel lediglich in dem Zentriwinkelbereich, in dem gerade ein Eingriff mit einem weiteren Zahnrad 20 erfolgt, in die Hohlräume 10 und die entsprechenden Kanäle 11 gelangt. Dadurch wird eine gezielte Schmierung lediglich im Zahneingriffsbereich erreicht.

Fig. 9 bis 11 zeigen ein Zahnrad 21, welches einen Zahnradkörper 22 und gleichmäßig verteilte, eine Innenverzahnung ausbildende Zähne 23 umfasst, die jeweils einen Zahngrund 24, Zahnflanken 25 und einen Zahnkopf 26 aufweisen. Am Zahngrund 24 und am Zahnkopf 26 sind Öffnungen bzw. Mündungen 27 bzw. 28 vorgesehen, über welche Schmier- oder Kühlmittel vom Inneren des Zahnrads 21 an die Zahnoberfläche gebracht werden kann. Auf jedem Zahngrund 24 und auf jedem Zahnkopf 26 ist eine Mehrzahl von Mündungen 27 bzw. 28 in einer Reihe angeordnet, die sich parallel zur Rotationsachse des Zahnrads 21 erstreckt.

Die Schmier- oder Kühlmittelzufuhr erfolgt über die über den Umfang des Zahnrads 21 verteilten Anschlüsse 29, welche in die Ringkammer 30 münden. Auf Grund des Drucks des zugeführten Schmier- oder Kühlmittels wird dieses von der Ringkammer 30 in die Kanäle 31 und 32 gedrückt und über die Mündungen 28 bzw. 29 auf die Oberfläche der Zähne 23 gebracht. Die Ringkammer ist hierbei mit Abstützungen 33 versehen, die in der Kammer 30 angeordnet sind.

In der perspektivischen Darstellung gemäß Fig. 13 und in der zugehörigen Schnittdarstellung gemäß Fig. 14 ist eine abgewandelte Ausbildung dargestellt, wobei ersichtlich ist, dass die Mündungen 8 der Kanäle 11 im Zahngrund 4 mit einer Verstärkung 34 versehen sind, um die Zahnfußspannungen an dieser Stelle niedriger zu halten. Diese Verstärkung 34 kann ungefähr halb so hoch sein wie das übliche Kopfspiel des Gegenrades.

## Patentansprüche

1. Zahnrad mit einem Zahnradkörper und gleichmäßig verteilten, eine Außen- oder Innenverzahnung ausbildenden Zähnen, die jeweils einen Zahngrund, Zahnflanken und einen Zahnkopf aufweisen, **dadurch gekennzeichnet, dass** der Zahnradkörper und/oder die Zähne Hohlräume aufweisen, die an der Oberfläche des Zahnkopfes, des Zahngrunds und/oder der Zahnflanken münden und mit einer im Zahnrad ausgebildeten Schmier- und/oder Kühlmittelzuführung in Fluidverbindung stehen.

2. Zahnrad nach Anspruch 1, **dadurch gekennzeichnet, dass** die Hohlräume von Kanälen gebildet sind, die sich zumindest abschnittsweise in radialer Richtung erstrecken.

3. Zahnrad nach Anspruch 2, **dadurch gekennzeichnet, dass** die Kanäle eine Querschnittsfläche von < 7 mm², bevorzugt < 5 mm² aufweisen.

4. Zahnrad nach Anspruch 2 oder 3, **dadurch gekennzeichnet, dass** die Kanäle einen sich in Richtung der Austrittsöffnung verjüngenden Querschnitt aufweisen.

5. Zahnrad nach Anspruch 2, 3 oder 4, **dadurch gekennzeichnet, dass** an der Oberfläche eines jeden Zahnkopfes bzw. Zahngrunds bzw. einer jeden Zahnflanke eine Mehrzahl von Kanälen mündet, wobei vorzugsweise die Mündungen der Mehrzahl der Kanäle in wenigstens einer parallel zur Rotationsachse des Zahnrades verlaufenden Reihe angeordnet sind.

6. Zahnrad nach Anspruch 5, **dadurch gekennzeichnet, dass** die Mündungen der Zuführkanäle im Zahngrund mit einer Verstärkung versehen sind.

7. Zahnrad nach Anspruch 1, **dadurch gekennzeichnet, dass** die Hohlräume als Poren eines offenporigen Materials ausgebildet sind, aus dem der Zahnradkörper und/oder die Zähne zumindest bereichsweise bestehen.

8. Zahnrad nach einem der Ansprüche 1 bis 7, **dadurch gekennzeichnet, dass** die Schmier- oder Kühlmittelzuführung eine Fördereinrichtung für das Schmier- oder Kühlmittel aufweist.

9. Zahnrad nach Anspruch 8, **dadurch gekennzeichnet, dass** die Fördereinrichtung nach Art einer Zentrifugalpumpe ausgebildet ist, und eine Vielzahl von am oder im Zahnradkörper ausgebildeten Schaufeln oder Speichen aufweist.

10. Zahnrad nach einem der Ansprüche 1 bis 9, **dadurch gekennzeichnet, dass** die Schmier- oder Kühlmittelzuführung eine im Zahnradkörper ausgebildete Ringkammer aufweist, an welche eine externe Schmier- oder Kühlmittelleitung über eine Drehdurchführung anschließbar ist.

11. Zahnrad nach Anspruch 10, **dadurch gekennzeichnet, dass** ein einen Anschluss für die externe Schmier- oder Kühlmittelleitung aufweisender feststehender Teil der Drehdurchführung einen vorzugsweise kreisbogenförmigen Strömungskanal aufweist, der über eine sich lediglich über einen Umfangsteilabschnitt, insbesondere über einen Zentriwinkel von < 180°, vorzugsweise < 60°, erstreckende Öffnung mit der Ringkammer des Zahnradkörpers in Fluidverbindung steht.

12. Zahnrad nach einem der Ansprüche 1 bis 11, **dadurch gekennzeichnet, dass** das Zahnrad mittels eines generativen Fertigungsverfahrens, wie z.B. selektives Laserschmelzen (SLM) oder selektives Lasersintern (SLS), hergestellt ist.

13. Zahnradgetriebe umfassend wenigstens ein erstes und ein zweites Zahnrad nach einem der Ansprüche 1 bis 11, deren Zähne miteinander in Eingriff stehen.

14. Zahnradgetriebe umfassend wenigstens ein erstes Zahnrad nach einem der Ansprüche 1 bis 11 und wenigstens ein zweites Zahnrad, deren Zähne miteinander in Eingriff stehen.

15. Zahnradgetriebe nach Anspruch 12 oder 13, **dadurch gekennzeichnet, dass** das Zahnradgetriebe als Stirnrad, Kegelrad-, Planeten- oder Schneckengetriebe ausgebildet ist.
